# EUROPÄISCHE PATENTSCHRIFT

(11) **EP 2 952 065 B1**
(45) Veröffentlichungstag und Bekanntmachung des Hinweises auf die Patenterteilung: **08.08.2018**
(21) Anmeldenummer: 14712184.2
(22) Anmeldetag: 31.01.2014
(51) Int. Cl.: H05B 33/08, H05B 37/02, A21C 3/04

(54) **VORRICHTUNG UND VERFAHREN ZUM BETREIBEN VON LEDS**
DEVICE AND METHOD FOR OPERATING LEDS
DISPOSITIF ET PROCÉDÉ SERVANT À FAIRE FONCTIONNER DES DEL

(30) Priorität: 31.01.2013 AT 292013 U
(43) Veröffentlichungstag der Anmeldung: 09.12.2015
(73) Patentinhaber: Tridonic GmbH & Co. KG, 6851 Dornbirn (AT); Tridonic Jennersdorf GmbH, 8380 Jennersdorf (AT)
(72) Erfinder: DÜNSER, Mathias, A-6700 Bludenz (AT); MOOSMANN, Florian, A-6850 Dornbirn (AT); KLEBER, Norbert, A-6850 Dornbirn (AT); NESENSOHN, Christian, A-6840 Götzis (AT); LOCHMANN, Frank, 88147 Esseratsweiler (DE); JUEN, Reinhold, A-6850 Dornbirn (AT); MARENT, Günter, A-6780 Bartholomäberg (AT); HORN, Frank, CH-6765 Engi (CH); PACHLER, Peter, A-8042 Graz (AT); SCHÖNBERGER, John, CH-8864 Reichenburg (CH); RIEMER, Steffen, A-8564 Krottendorf-Gaisfeld (AT)
(74) Vertreter: Banzer, Hans-Jörg
(86) Internationale Anmeldenummer: PCT/AT2014/000022
(87) Internationale Veröffentlichungsnummer: WO 2014/117193

(56) Entgegenhaltungen:
- EP-A1- 2 375 858
- WO-A1-2006/056066
- WO-A1-2011/067177
- WO-A2-2008/001274
- WO-A2-2009/011898
- DE-A1-102010 031 242
- US-A1- 2009 289 579

## Beschreibung

Die Erfindung betrifft eine Vorrichtung zum Betreiben von LEDs gemäß Patentanspruch 1 und ein Verfahren zum Betreiben von LEDs gemäß Patentanspruch 16.

### Technisches Gebiet

Derartige Vorrichtungen werden in Beleuchtungssystemen verwendet, um eine farbige oder flächige Beleuchtung von Räumen, Wegen oder auch Fluchtwegen zu erreichen. Üblicherweise werden dabei die Leuchtmittel von Betriebsgeräten angesteuert und bei Bedarf aktiviert. Für eine derartige Beleuchtung werden organische oder anorganische Leuchtdioden (LED) als Lichtquelle genutzt.

### Stand der Technik

Zur Beleuchtung werden anstelle von Gasentladungslampen und Glühlampen immer häufiger auch Leuchtdioden als Lichtquelle eingesetzt. Die Effizienz und Lichtausbeute von Leuchtdioden wird immer stärker erhöht, so dass sie bei verschiedenen Anwendungen der Allgemeinbeleuchtung bereits zum Einsatz kommen. Allerdings sind Leuchtdioden Punktlichtquellen und strahlen stark gebündeltes Licht
aus.

Ein Vorrichtung zum Betreiben von LEDs gemäß dem Oberbegriff des Patentanspruchs 1 sowie ein korrespondierendes Verfahren gemäß dem Oberbegriff des Patentanspruchs 16 sind aus der Patentschrift DE102010031242A1 bekannt. Die Patentschrift US2009/289579A1 offenbart ebenfalls eine Vorrichtung und ein Verfahren zum Betreiben von LEDs. Heutige LED Beleuchtungssysteme haben oft jedoch den Nachteil, dass aufgrund von Alterung oder durch Austausch einzelner LEDs oder LED Module sich die Farbabgabe oder die Helligkeit verändern kann.

Zudem hat die Sekundäroptik einen Einfluss auf das Thermomanagement, da die Wärmeabstrahlung behindert wird. Zudem kann es aufgrund von Alterung und Wärmeeinwirkung zu einer Veränderung des Phosphors der LED kommen.

### Darstellung der Erfindung

Es ist die Aufgabe der Erfindung, ein Leuchtmittel und ein Verfahren bereitzustellen, welches das gleichmäßige und farbechte Ausleuchten einer Fläche durch ein Leuchtmittel mit Leuchtdioden ohne die oben genannten Nachteile bzw. unter einer deutlichen Reduzierung dieser Nachteile ermöglicht.
Diese Aufgabe wird für eine gattungsgemäße Vorrichtung erfindungsgemäß durch die kennzeichnenden Merkmale des Patentanspruchs 1 und für ein Verfahren erfindungsgemäß durch die kennzeichnenden Merkmale des Patentanspruchs 16 gelöst. Besonders vorteilhafte Ausführungen der Erfindung sind in den Unteransprüchen beschrieben.
Die erfindungsgemäße Lösung für eine Vorrichtung zum Betreiben von LEDs (organische oder anorganische Leuchtdioden) beruht auf dem Gedanken, dass ein LED-Modul mit wenigstens einer LED von einem Treiber-Modul angesteuert wird, wobei das LED-Modul über einen ersten Anschluß von dem Treiber-Modul mit einem Strom gespeist wird und ein zweiter Anschluß vorzugsweise als Masse-Verbindung vorhanden ist. Das LED-Modul verfügt über einen dritten Anschluß, der als Daten-Kanal ausgebildet ist Der dritte Anschluß ist mit dem Treiber-Modul verbunden, wobei auf dem Daten-Kanal eine Spannung anliegt, die von dem Treiber-Modul gespeist wird.

Auf diese Weise ist es möglich, eine sehr gleichbleibende und gleichmäßige Ausleuchtung einer Fläche durch ein Leuchtmittel mit Leuchtdioden zu erreichen.

Die erfindungsgemäße Lösung betrifft auch ein Vorrichtung zum Betreiben von LEDs, aufweisend ein Treiber-Modul, und ein von dem Treiber-Modul angesteuertes LED-Modul mit wenigstens einer LED, wobei das LED-Modul über einen ersten Anschluß von dem Treiber-Modul mit einem Strom gespeist wird und ein zweiter Anschluß, vorzugsweise als Masse-Verbindung, vorhanden ist, wobei das LED-Modul über einen dritten Anschluß, der als Daten-Kanal ausgebildet ist, mit dem Treiber-Modul verbunden ist, wobei auf dem Daten-Kanal eine Spannung anliegt, die von dem Treiber-Modul gespeist wird.

Das LED-Modul ist dazu ausgelegt, die Spannung an dem Daten-Kanal zum Senden von Informationen kurzzuschließen.

Die von dem LED-Modul gesendeten Informationen enthalten eine Auskunft über einen Parameter des LED-Moduls oder den Status des LED-Moduls. Die Spannung an dem Daten-Kanal wird zum Speisen einer Logikschaltung auf dem LED-Modul verwendet.

Erfindungsgemäß wird die durch das Treiber-Modul an dem Daten-Kanal gespeiste Spannung nach Ablauf einer Startphase des Treiber-Moduls abgeschaltet. Die Spannung an dem Daten-Kanal kann zum Speisen eines Sensors verwendet werden, der auf dem LED-Modul angeordnet ist oder der mit dem LED-Modul verbunden ist.

Die von dem LED-Modul gesendeten Informationen können eine Auskunft über den Status des Sensors oder ein von dem Sensor erfasstes Signal beinhalten.
Über den Daten-Kanal kann eine Adressinformation übertragen werden.

Das Treiber-Modul kann auch eine Spannung auf den Daten-Kanal einspeisen, wenn das LED-Modul nicht über den ersten Anschluß von dem Treiber-Modul mit einem Strom gespeist wird.

Das LED-Modul kann auch Informationen senden, wenn das LED-Modul nicht über den ersten Anschluß von dem Treiber-Modul mit einem Strom gespeist wird.

Das LED-Modul kann über einen Speicher verfügen, der von dem Treiber-Modul über den Daten-Kanal ausgelesen werden kann.

Das Treiber-Modul kann dazu ausgelegt sein, die Spannung an seinem Ausgang für den Daten-Kanal zu überwachen und eine Änderung der Spannung an diesem Ausgang als Übertragung von Informationen auswerten kann.

Das Treiber-Modul kann die Spannung an seinem Ausgang für den Daten-Kanal kurzzeitig absenken, vorzugsweise in Form eines pulsmodulierten Signals, um eine Information an das Treiber-Modul zu senden.

Das Treiber-Modul kann regelmäßig den Speicher des LED-Modul auslesen und nach dem Austausch des LED-Moduls kann die ausgelesenen Speicher-Informationen in dem Speicher des neuen LED-Moduls abgelegt werden.

Dass Treiber-Modul kann mehrere LED-Module über den selben Anschluß zur Speisung mit Strom speisen kann und über den selben Anschluß für den Daten-Kanal mit mehreren LED-Modulen Informationen austauschen.

Ein oder mehrere LED-Module können abgeschaltet werden, indem über den Daten-Kanal eine entsprechende Abschalt-Information an diese LED-Module übertragen wird und diese daraufhin den Strom durch die LED unterbrechen.

Der Sensor kann ein Farbsensor (bspw. CCD Sensor) oder Helligkeitssensor sein.

Der Farbsensor oder Helligkeitssensor kann so platziert sein, dass er einen Teil des von den LED Modulen abgestrahlten Lichtes empfangen kann. Der Farbsensor oder Helligkeitssensor kann, dass er gegen Umgebungslicht abgeschottet ist und nur von den LED Modulen abgestrahltes Licht empfangen kann.

Der Sensor kann ein Anwesenheitssensor oder Bewegungssensor sein.

Auf dem LED-Modul kann eine Kunstlast angeordnet sein, die mit dem Anschluß für den Daten-Kanal verbunden ist, wobei diese Kunstlast den Daten-Kanal belastet und diese Belastung durch das Treiber-Modul als Information von dem LED-Modul ausgewertet werden kann. Die Kunstlast kann durch ein passives Bauteil, vorzugsweise einen Widerstand, gebildet werden.

Das Treiber-Modul kann dazu ausgelegt sein, sowohl analoge Informationen, vorzugsweise aufgrund der Belastung mit einer Kunstlast, als auch digitale Informationen, vorzugsweise durch pulsweitenmodulierte Signale, von dem LED-Modul empfangen kann.
Die Erfindung betrifft auch eine Leuchte mit LED, aufweisend eine erfindungsgemäße Vorrichtung.
Die Erfindung betrifft auch ein Verfahren zum Betreiben von LEDs, wobei LED-Modul mit wenigstens einer LED von einem Treiber-Modul angesteuert wird, und ein Daten-Kanal zur Übertragung von Informationen über das LED-Modul vorhanden ist, wobei der Daten-Kanal von dem Treiber-Modul mit einer Spannung gespeist wird und das LED-Modul dazu ausgelegt ist, die Spannung an dem Daten-Kanal zum Senden von Informationen zu ändern, beispielsweise kurzzuschließen oder durch Belastung zu verringern.

Die Informationen von dem LED-Modul kann nach einer Aufforderung durch das Treiber-Modul gesendet werden.
Der Daten-Kanal kann auch in einem Stand-by Modus von dem Treiber-Modul mit einer Spannung gespeist werden und eine Kommunikation zwischen LED-Modul und Treiber-Modul kann auch in diesem Stand-by Modus möglich sein. Beispielsweise kann eine unidirektionale oder auch bidirektionale Kommunikation zwischen LED-Modul und Treiber-Modul möglich sein.

### Beschreibung der bevorzugten Ausführungsbeispiele

Nachfolgend soll die Erfindung anhand der beigefügten Zeichnung näher erläutert werden. Es zeigen:
Fig. 1 zeigt eine Ausgestaltung eines erfindungsgemäßen LED-Moduls
Fig. 2 zeigt eine Ausgestaltung einer erfindungsgemäßen Vorrichtung

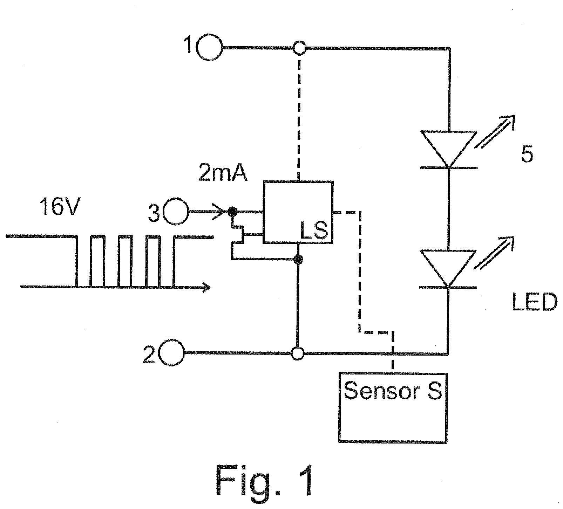

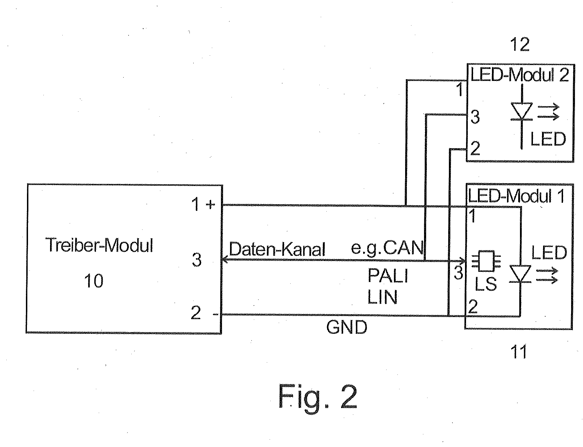

Fig. 1 zeigt eine Ausgestaltung des LED-Moduls 11 gemäß der Erfindung und Fig. 2 zeigt eine Ausgestaltung der erfindungsgemäßen Vorrichtung mit zwei LED-Modulen (LED-Modul 11, LED-Modul 21) und einem Treiber-Modul 10.

Nachfolgend wird die Erfindung anhand eines Ausführungsbeispiels einer Vorrichtung zum Betreiben von LEDs erklärt. Diese Vorrichtung weist ein Treiber-Modul 10 auf, und ein von dem Treiber-Modul 10 angesteuertes LED-Modul 10 mit wenigstens einer LED 5.

Das Treiber-Modul 10 verfügt über einen ersten Anschluß, über den das daran angeschlossene LED-Modul 11 von dem Treiber-Modul 10 mit einem Strom gespeist werden kann. Dieser Strom dient zur Speisung der LED 5. Weiterhin verfügt das Treiber-Modul 10 über einen zweiten Anschluß, der vorzugsweise als Masse-Verbindung (GND) vorhanden ist.

Das LED-Modul 11 verfügt über einen ersten Anschluß 1, über den das LED-Modul von dem Treiber-Modul mit einem Strom gespeist wird und über einen zweiten Anschluß 2 vorzugsweise als Masse-Verbindung. Es können sich mehrere LED 5 auf einem gemeinsamen LED-Modul 11 befinden.

Der zweite Anschluß 2 kann auch eine virtuelle Masse für das LED-Modul 11 bilden, dies soll bedeuten, dass dies einen lokalen Massebezugspunkt für das LED-Modul 11 bilden kann, wobei dieser lokale Massebezugspunkt nicht die Masse des Treiber-Moduls 10 sein muß. Beispielsweise kann es sein, dass zwischen der Masse und dem zweiten Anschluß 2 des Treiber-Moduls 10 Bauelemente angeordnet sind. In diesem Fall ist der zweite Anschluß 2 auf dem Treiber-Modul 10 nicht direkt mit Masse verbunden, trotzdem kann der damit verbundene zweite Anschluß 2 auf dem LED-Modul 11 wie eine lokale Masse wirken, wenn Messungen auf dem LED-Modul 11 in Bezug auf diesen Punkt erfolgen.
Das LED-Modul 11 und auch das Treiber-Modul 10 verfügen über einen dritten Anschluß 3, der als Daten-Kanal ausgebildet ist. Es sind also die Anschlüsse für den Daten-Kanal von dem LED-Modul 11 und dem Treiber-Modul 10 miteinander verbunden, Auf dem Daten-Kanal liegt eine Spannung an, die von dem Treiber-Modul 10 gespeist wird.

Die Anschlüsse des Treiber-Modul 10 und des LED-Modul 11 sind über die Verdrahtung 4 verbunden. Es ist somit eine Verbindung zum Speisen der LED neben einer Masse-Verbindung sowie ein Daten-Kanal vorhanden.

Das LED-Modul 11 ist dazu ausgelegt, die Spannung an dem Daten-Kanal zum Senden von Informationen kurzzuschließen. Dies kann beispielsweise durch einen Schalter S1 erfolgen, der kurzzeitig den dritten Anschluß (Daten-Kanal) mit dem zweiten Anschluß (lokale Masse-Verbindung (GND)) kurz schließt.

Die von dem LED-Modul 11 gesendeten Informationen enthalten eine Auskunft über einen Parameter des LED-Modul 11 oder den Status des LED-Modul 11. Beispielsweise kann das Treiber-Modul 10 entsprechend den von dem LED-Modul 11 gesendeten Informationen seinen Betrieb anpassen und beispielsweise den Strom entsprechend anpassen, mit dem das LED-Modul 11 über den ersten Anschluß 1 gespeist wird.

Die Spannung an dem Daten-Kanal wird zum Speisen einer Logikschaltung (LS) auf dem LED-Modul 11 verwendet. Die Logikschaltung kann beispielsweise einen Mikrocontroller aufweisen, der die Spannung am Daten-Kanal überwachen kann und auch das Senden eines Signals auf dem Daten-Kanal steuern kann. Beispielsweise kann die Logikschaltung einen Schalter S1 ansteuern, der kurzzeitig den dritten Anschluß (Daten-Kanal) mit dem zweiten Anschluß (lokale Masse-Verbindung (GND)) kurz schließt.

Die Spannung kann an dem Daten-Kanal zum Speisen eines Sensors S verwendet werden, der auf dem LED-Modul 11 angeordnet ist oder der mit dem LED-Modul 11 verbunden ist. Die von dem LED-Modul 11 gesendeten Informationen kann eine Auskunft über den Status des Sensors S oder ein von dem Sensor S erfasstes Signal beinhalten.
Über den Daten-Kanal kann eine Adressinformation übertragen werden. Auf diese Weise können bei Anschluß mehrerer LED-Module an ein Treiber-Modul 10 die einzelnen LED-Module identifiziert werden und die LED-Module können einzeln und selektiv Rückmeldungen (spezifische Informationen senden) geben.

Die Informationen von dem LED-Modul 11 können nach einer Aufforderung durch das Treiber-Modul 10 gesendet werden.

Das Treiber-Modul 10 kann auch eine Spannung auf den Daten-Kanal (Anschluß 3) einspeisen, wenn das LED-Modul 11 nicht über den ersten Anschluß 1 von dem Treiber-Modul 10 mit einem Strom gespeist wird. Das LED-Modul 11 kann auch Informationen senden, wenn das LED-Modul 11 nicht über den ersten Anschluß 1 von dem Treiber-Modul 10 mit einem Strom gespeist wird.
So kann der Daten-Kanal 3 auch in einem Stand-by Modus von dem Treiber-Modul 10 mit einer Spannung gespeist werden und eine Kommunikation zwischen LED-Modul 11 und Treiber-Modul 10 ist auf in diesem Stand-by Modus möglich.

Das LED-Modul 11 kann über einen Speicher verfügen, der von dem Treiber-Modul 10 über den Daten-Kanal ausgelesen werden kann.

Das Treiber-Modul 10 kann dazu ausgelegt sein, die Spannung an seinem Ausgang für den Daten-Kanal (Anschluß 3) zu überwachen und eine Änderung der Spannung an diesem Ausgang kann als Übertragung von Informationen ausgewertet werden. Diese Auswertung der Spannung an dem dritten Anschluß 3 (Daten-Kanal) kann also zum Empfangen von Informationen, die von dem LED-Modul 11 gesendet wurden, genutzt werden.

Das Treiber-Modul 10 die Spannung an seinem Ausgang für den Daten-Kanal kurzzeitig absenken kann, vorzugsweise in Form eines pulsmodulierten Signals, um eine Information an das LED-Modul 11 zu senden.

Das Treiber-Modul 10 kann regelmäßig den Speicher des LED-Modul 11 auslesen und nach dem Austausch des LED-Moduls 11 die ausgelesenen Speicher-Informationen in dem Speicher des neuen LED-Moduls 11 abgelegt werden. Die Signalisierung zum Auslesen des Speichers auf dem LED-Modul 11 kann durch den Benutzer durch eine Schaltfolge an der Versorgungsspannung, einen digitalen Steuerbefehl oder durch eine andere Signalisierung erfolgen.

Das Treiber-Modul 10 kann die im Speicher abgelegte Information nach dem Auslesen von einem LED-Modul 11 auch über den Daten-Kanal auch an andere LED-Module weiterleiten.

Der Daten-Kanal kann beispielsweise für eine Kommunikation zwischen LED-Modul 11 und Treiber-Modul 10 gemäß einem bestehenden Protokoll wie DALI, LJN oder CAN oder auch einem anderen definierten Protokoll ausgelegt sein. Das definierte Protokoll kann auch ein spezifisches Protokoll für den Austausch von Daten zwischen LED-Modulen und Treiber-Modulen sein.

Das Treiber-Modul 10 kann mehrere LED-Module über denselben ersten Anschluß 1 zur Speisung mit Strom speisen und über denselben dritten Anschluß 3 für den Daten-Kanal mit mehreren LED-Modulen Informationen austauschen.

Es können beispielsweise ein oder mehrere LED-Module 11. 12 abgeschaltet werden, indem über den Daten-Kanal eine entsprechende Abschalt-Information an diese LED-Module 11. 12 übertragen wird und diese daraufhin den Strom durch die LED unterbrechen.

Der Sensor S kann ein Farbsensor (bspw. CCD Sensor oder eine Photodiode mit Farbfilter) sein. Der Farbsensor kann so platziert sein, dass er einen Teil des von den LED Modulen abgestrahlten Lichtes empfangen kann. Der Farbsensor kann so platziert sein, dass er gegen Umgebungslicht abgeschottet ist und nur von den LED Modulen abgestrahltes Licht empfangen kann. Der Sensor S kann aber auch auf dem Reflektor der LED Leuchte platziert werden.
Der Sensor S kann so platziert sein, dass er direkt oder indirekt das Licht der LED des LED-Modules empfängt.

Der Sensor S kann ein Helligkeitssensor (bspw. eine Photodiode) sein. Der Sensor S kann ein Umgebungslichtsensor oder ein Kunstlichtsensor sein.
Der Sensor S, beispielsweise ein Kunstlichtsensor, kann so platziert sein, dass er gegen Umgebungslicht abgeschottet ist und nur von den LED Modulen abgestrahltes Licht empfangen kann. Der Sensor S kann so platziert sein, dass er direkt oder indirekt das Licht der LED des LED-Modules empfängt. Der Sensor S, vorzugsweise als ein Umgebungslichtsensor, kann so platziert sein, dass er nur Umgebungslicht empfangen kann und gegen von den LED Modulen abgestrahltes Licht abgeschottet ist. Eine derartige Abschottung kann beispielsweise durch einen Farbfilter oder auch durch eine physische Trennung wie beispielsweise eine Art Trennwand zwischen LED und Sensor S erreicht werden Der Sensor S kann auch auf dem Reflektor der LED Leuchte platziert werden.

Der Sensor S kann auch ein Anwesenheitssensor oder Bewegungssensor sein. Zusätzlich oder alternativ kann der Sensor S auch ein Temperatursensor sein.

Der Sensor S kann auch durch eine Kombination von mehreren verschiedenen Sensoren gebildet werden. Beispielsweise können sich in einem Gehäuse mehrere Sensoren befinden, die durch eine gemeinsame Elektronik ausgewertet werden (auch möglich als Multi-Chip- Anordnung).

Als Sensor S kann auch ein Infrarotsensor vorhanden sein, um Steuersignale einer Infrarot-Fernbedienung zu empfangen.
Als Sensor S kann auch ein Funkempfänger vorhanden sein, um Steuersignale eines kabellosen Steuergeräts wie beispielsweise eines Smartphones mit Funksender (z.B. Bluetooth, Ziogbee oder WLAN) oder eines kabellosen Lichtsteuersenders (z.B. Wireless DALI) zu empfangen.

Wenn ein zumindest ein Sensor S auf dem LED-Modul 11 angeordnet ist und das LED-Modul 11 Informationen von dem Sensor S über den Daten-Kanal an das Treiber-Modul 10 sendet, dann kann das Treiber-Modul 10 entsprechend der empfangenen Informationen den Betrieb des LED-Moduls 11 anpassen. Beispielsweise kann es den Strom durch die LED erhöhen, wenn ein Anwesenheitssensor oder Bewegungssensor eine Person erkennt oder es kann den Strom senken, wenn das Umgebungslicht eine vorgegebene Mindesthelligkeit überschreitet.

Wenn ein Temperatursensor auf dem LED-Modul 11 vorhanden ist, kann dieser auch eine Übertemperatur als Information über den Daten-Kanal an das Treiber-Modul 10 übermitteln und das Treiber-Modul 10 kann daraufhin den Strom durch die LED absenken oder auch unterbrechen.

Wenn ein Sensor S zum Empfang eines Steuersignals wie beispielsweise ein Infrarotsensor oder Funkempfänger vorhanden ist, kann auch eine Steuerung der Helligkeit des LED-Moduls 11 über diesen Sensor S erfolgen, indem der Sensor S das empfangene Steuersignal von dem LED-Modul 11 über den Daten-Kanal an das Treiber-Modul 10 übermittelt und das Treiber-Modul 10 dann entsprechend die Speisung des LED-Moduls über den ersten Anschluß 1 anpasst, beispielsweise entsprechend der Vorgabe des Steuersignals den Strom für die LED anpasst.

Auf diese Weise kann eine kabellose Steuerung des Systems aus Treiber-Modul 10 und LED-Modul 11 erreicht werden, ohne dass eine Steuerleitung zu einem externen Steuergerät wie beispielsweise ein DALI-Busleitungspaar erforderlich wäre.

Auf dem LED-Modul 11 kann auch eine Kunstlast angeordnet sein, die mit dem Anschluß 3 für den Daten-Kanal verbunden ist, wobei diese Kunstlast den Daten-Kanal belastet und diese Belastung durch das Treiber-Modul 10 als Information von dem LED-Modul 11 ausgewertet werden kann. Die Kunstlast kann vorzugsweise durch ein passives Bauteil, vorzugsweise einen Widerstand, gebildet werden. Der Wert der Kunstlast stellt in diesem Fall eine Kodierung eines Kennwertes des LED-Moduls 11, beispielsweise eines Betriebsparameters oder der Farbe oder dominanten Wellenlänge des LED-Moduls 11, dar. Beispielsweise kann der Wert der Kunstlast eine Information über den nominalen Betriebsstrom des LED-Moduls 11 wiedergeben.

Beispielsweise kann der Widerstandswert der Kunstlast in einem linear proportionalen oder auch umgekehrt proportionalen Verhältnis zu dem nominalen Betriebsstrom des LED-Moduls 11 stehen, oder alternativ in einem exponentialen oder logarithmischen Verhältnis zu dem nominalen Betriebsstrom des LED-Moduls 11 stehen.
Das Treiber-Modul 10 kann dazu ausgelegt sein, sowohl analoge Informationen, vorzugsweise aufgrund der Belastung mit einer Kunstlast, als auch digitale Informationen, vorzugsweise durch pulsweitenmodulierte Signale, von dem LED-Modul 11 zu empfangen.
Somit kann auch eine Leuchte mit LED, aufweisend eine gemäß der Erfindung aufgebaut werden
Es wird auch ein Verfahren zum Betreiben von LEDs ermöglicht, wobei ein LED-Modul 11 mit wenigstens einer LED von einem Treiber-Modul 10 angesteuert wird, und ein Daten-Kanal zur Übertragung von Informationen über das LED-Modul 11 vorhanden ist, wobei der Daten-Kanal von dem Treiber-Modul 10 mit einer Spannung gespeist wird und das LED-Modul 11 dazu ausgelegt ist, die Spannung an dem Daten-Kanal zum Senden von Informationen kurzzuschließen. Das Treiber-Modul 10 speist den Anschluß 3 und damit den Daten-Kanal nur nach dem Start oder Einschalten mit einer Spannung, um innerhalb einer Startphase eine Information von dem LED-Modul 11 über den Datenkanal auszulesen, und nach Ablauf der Startphase die Spannung an dem dritten Anschluß abzuschalten und somit den Daten-Kanal wieder zu deaktivieren. Es kann dabei auch möglich sein, dass der Daten-Kanal wiederholt nach einer bestimmten Zeit kurzzeitig wieder aktiviert wird, um neuerlich eine Information von dem LED-Modul 11 auszulesen oder auch um eine Abfrage zu starten oder bestimmte Informationen oder auch Helligkeitsbefehle oder andere Instruktionen an das LED-Modul 11 zu senden. Es wäre auch möglich, auf diese Weise eine Alterung oder Laufdauer des LED-Moduls 11 zu überwachen.
Die Informationen von dem LED-Modul 11 können nach einer Aufforderung durch das Treiber-Modul 10 gesendet werden.

Es ist somit gemäß der Erfindung sowohl eine unidirektionale Kommunikation als auch eine bidirektionale Kommunikation zwischen dem Treiber-Modul 10 und einem oder mehreren LED-Modulen 11, 12 möglich.

Der Daten-Kanal kann auch in einem Stand-by Modus von dem Treiber-Modul 10 mit einer Spannung gespeist werden und eine Kommunikation zwischen LED-Modul 11 und Treiber-Modul 10 kann auch in diesem Stand-by Modus möglich sein, also beispielsweise wenn die LED ausgeschaltet sind. Somit kann beispielsweise eine weitere Überwachung mit Hilfe eines oder mehrerer Sensoren des LED-Moduls 11 auch dann erfolgen, wenn die LED des LED-Moduls 11 abgeschaltet sind und keine Spannung an dem ersten Eingang 1 zur Speisung der LED 5 angelegt ist.

Das LED-Modul 11 kann über einem Speicher zur Hinterlegung von Informationen über das LED-Modul 11 verfügen, wobei die Informationen im Speicher optional auch abgeändert werden können.
Die Informationen im Speicher können aufgrund einer Kalibrierungsmessung abgeändert werden. Die Informationen im Speicher können um einen Korrekturfaktor abgeändert werden. Der Korrekturfaktor kann von der Alterung bzw. der Betriebsdauer des LED-Moduls abhängig sein. Der Korrekturfaktor kann von der Temperatur des LED-Moduls abhängig sein.

Das Treiber-Modul 10 kann einen Schaltregler, beispielsweise einen AC-DC-Wandler, enthalten.
Das Treiber-Modul 10 kann einen PFC (aktive Leistungsfaktorkorrekturschaltung) enthalten. Das Treiber-Modul 10 kann eine Potentialtrennung aufweisen. Beispielsweise kann das Treiber-Modul 10 einen potentialgtrennten Schaltregler wie einen isolierten Sperrwandler oder einen isolierten Halbbrückenwandler aufweisen. Das Treiber-Modul 10 kann optional über eine Schnittstelle zur Benutzersteuerung verfügen, beispielsweise zum Einstellen der Helligkeit. Diese Schnittstelle kann beispielsweise zum Anschluß an ein Lichtsteuersystem wie beispielsweise DALI oder DMX ausgelegt sein.

## Patentansprüche

1. Vorrichtung zum Betreiben von LEDs, aufweisend:
ein Treiber-Modul (10), wobei das Treiber-Modul einen Schaltregler, eine Leistungsfaktorkorrekturschaltung, eine Potentialtrennung und/oder eine Schnittstelle zur Benutzersteuerung aufweist; und
ein von dem Treiber-Modul (10) angesteuertes LED-Modul (11) mit wenigstens einer LED (5);
wobei das LED-Modul (11) über einen ersten Anschluß (1) von dem Treiber-Modul (10) mit einem Strom gespeist wird und ein zweiter Anschluß (2), vorzugsweise als Masse-Verbindung (GND), vorhanden ist;
wobei das LED-Modul (11) über einen dritten Anschluß (3), der als Daten-Kanal ausgebildet ist, mit dem Treiber-Modul (10) verbunden ist, wobei auf dem Daten-Kanal eine Spannung anliegt, die von dem Treiber-Modul (10) gespeist wird;
wobei das LED-Modul (11) dazu ausgelegt ist, Informationen zu senden, wobei die von dem LED-Modul (11) gesendeten Informationen eine Auskunft über einen Parameter des LED-Moduls (11) oder den Status des LED-Moduls (11) enthalten, wobei das LED-Modul (11) dazu ausgelegt ist, zum Senden der Informationen die Spannung an dem Daten-Kanal kurzzuschließen; und
wobei die Spannung an dem Daten-Kanal zum Speisen einer Logikschaltung auf dem LED-Modul (11) verwendet wird; **dadurch gekennzeichnet, dass**
die Vorrichtung dazu eingerichtet ist, die durch das Treiber-Modul (10) gespeiste Spannung an dem Daten-Kanal nach Ablauf einer Startphase des Treiber-Moduls (10) abzuschalten.

2. Vorrichtung zum Betreiben von LEDs, nach Anspruch 1,
**dadurch gekennzeichnet,**
**dass** die Spannung an dem Daten-Kanal weiter zum Speisen eines Sensors verwendet wird, der auf dem LED-Modul (11) angeordnet ist oder der mit dem LED-Modul (11) verbunden ist.

3. Vorrichtung zum Betreiben von LEDs, nach Anspruch 2,
**dadurch gekennzeichnet,**
**dass** die von dem LED-Modul (11) gesendeten Informationen eine Auskunft über den Status des Sensors oder ein von dem Sensor (S) erfasstes Signal beinhalten.

4. Vorrichtung zum Betreiben von LEDs, nach einem der vorstehenden Ansprüche,
**dadurch gekennzeichnet,**
**dass** über den Daten-Kanal eine Adressinformation übertragen wird.

5. Vorrichtung zum Betreiben von LEDs, nach einem der vorstehenden Ansprüche,
**dadurch gekennzeichnet,**
**dass** das Treiber-Modul (10) auch eine Spannung auf den Daten-Kanal einspeist, wenn das LED-Modul (11) nicht über den ersten Anschluß von dem Treiber-Modul (10) mit einem Strom gespeist wird.

6. Vorrichtung zum Betreiben von LEDs, nach einem der vorstehenden Ansprüche,
**dadurch gekennzeichnet,**
**dass** das LED-Modul (11) auch Informationen sendet, wenn das LED-Modul (11) nicht über den ersten Anschluß (1) von dem Treiber-Modul (10) mit einem Strom gespeist wird.

7. Vorrichtung zum Betreiben von LEDs, nach einem der vorstehenden Ansprüche,
**dadurch gekennzeichnet,**
**dass** das LED-Modul (11) über einen Speicher verfügt, der von dem Treiber-Modul (10) über den Daten-Kanal ausgelesen werden kann.

8. Vorrichtung zum Betreiben von LEDs, nach einem der vorstehenden Ansprüche,
**dadurch gekennzeichnet**,
das Treiber-Modul (10) dazu ausgelegt ist, die Spannung an seinem Ausgang (3) für den Daten-Kanal zu überwachen und eine Änderung der Spannung an diesem Ausgang (3) als Übertragung von Informationen auszuwerten.

9. Vorrichtung zum Betreiben von LEDs, nach einem der vorstehenden Ansprüche,
**dadurch gekennzeichnet,**
**dass** das Treiber-Modul (10) die Spannung an seinem Ausgang (3) für den Daten-Kanal kurzzeitig absenken kann, vorzugsweise in Form eines pulsmodulierten Signals, um eine Information an das LED-Modul (11) zu senden.

10. Vorrichtung zum Betreiben von LEDs, nach Anspruch 7,
**dadurch gekennzeichnet,**
**dass** das Treiber-Modul (10) regelmäßig den Speicher des LED-Modul (11) auslesen kann und nach dem Austausch des LED-Moduls die ausgelesenen Speicher-Informationen in dem Speicher des neuen LED-Moduls abgelegt werden.

11. Vorrichtung zum Betreiben von LEDs, nach einem der vorstehenden Ansprüche,
**dadurch gekennzeichnet,**
**dass** das Treiber-Modul (10) mehrere LED-Module über den selben Anschluß (1) zur Speisung mit Strom speisen kann und über den selben Anschluß (3) für den Daten-Kanal mit mehreren LED-Modulen Informationen austauschen kann.

12. Vorrichtung zum Betreiben von LEDs, nach einem der vorstehenden Ansprüche,
**dadurch gekennzeichnet,**
**dass** eine oder mehrere LED-Module abgeschaltet werden können, indem über den Daten-Kanal eine entsprechende Abschalt-Information an diese LED-Module übertragen wird und diese daraufhin den Strom durch die LED (5) unterbrechen.

13. Vorrichtung zum Betreiben von LEDs, nach Anspruch 2,
**dadurch gekennzeichnet,**
**dass** der Sensor (S) ein Farbsensor, beispielsweise ein CCD Sensor, ist.

14. Vorrichtung zum Betreiben von LEDs, nach Anspruch 13,
**dadurch gekennzeichnet,**
**dass** der Farbsensor so platziert ist, dass er einen Teil des von den LED Modulen abgestrahlten Lichtes empfangen kann.

15. Vorrichtung zum Betreiben von LEDs, nach einem der vorstehenden Ansprüche,
**dadurch gekennzeichnet,**
**dass** auf dem LED-Modul (11) eine Kunstlast angeordnet ist, die mit dem Anschluß (3) für den Daten-Kanal verbunden ist, wobei diese Kunstlast den Daten-Kanal belastet und diese Belastung durch das Treiber-Modul (10) als Information von dem LED-Modul (11) ausgewertet werden kann.

16. Verfahren zum Betreiben von LEDs, aufweisend die folgenden Schritte:
Ansteuern eines LED-Moduls (11) mit wenigstens einer LED (5) durch ein Treiber-Modul (10), welches einen Schaltregler, eine Leistungsfaktorkorrekturschaltung, eine Potentialtrennung und/oder eine Schnittstelle zur Benutzersteuerung aufweist, wobei ein Daten-Kanal zur Übertragung von Informationen über das LED-Modul (11) vorhanden ist;
Speisen des LED-Moduls (11) von dem Treiber-Modul (10) mit einem Strom über einen ersten Anschluß (1), wobei das LED-Modul einen zweiten Anschluß (2), vorzugsweise als Masse-Verbindung (GND), aufweist, und über einen dritten Anschluß (3), der als der Daten-Kanal ausgebildet ist, mit dem Treiber-Modul (10) verbunden ist;
Speisen des Daten-Kanals von dem Treiber-Modul (10) mit einer Spannung,
Verwenden der Spannung an dem Daten-Kanal zum Speisen einer Logikschaltung auf dem LED-Modul (11), und
Kurzschließen der Spannung an dem Daten-Kanal zum Senden von Informationen durch das LED-Modul (11);
wobei die von dem LED-Modul (11) gesendeten Informationen eine Auskunft über einen Parameter des LED-Moduls (11) oder den Status des LED-Moduls (11) enthalten, **gekennzeichnet durch** Abschalten der durch das Treiber-Modul (10) gespeisten Spannung an dem Daten-Kanal nach Ablauf einer Startphase des Treiber-Moduls (10).

## Claims

1. A device for operating LEDs, having: a driver module (10), wherein the driver module has a switching regulator, a power factor correction circuit, a potential separation and/or an interface for user control; and
an LED module (11) controlled by the driver module (10) with at least one LED (5); wherein the LED module (11) is supplied with a current by the driver module (10) via a first connection (1) and a second connection (2) is present, preferably as a ground connection (GND);
wherein the LED module (11) is connected with the driver module (10) via a third connection (3), which is designed as a data channel, wherein a voltage is applied to the data channel, which is supplied by the driver module (10);
wherein the LED module (11) is designed to send information, wherein the information sent by the LED module (11) contains a piece of information about a parameter of the LED module (11) or the status of the LED module (11),
wherein the LED module (11) is designed to short-circuit the voltage to the data channel in order to send the information; and
wherein the voltage to the data channel is used to supply a logic circuit on the LED module (11);
**characterized in that**
the device is configured to switch off the voltage to the data channel, which is supplied by the driver module (10), at the end of a start-up phase of the driver module (10).

2. A device for operating LEDs according to Claim 1,
**characterized in**
**that** the voltage to the data channel is further used for supplying a sensor, which is arranged on the LED module (11) or which is connected to the LED module (11).

3. A device for operating LEDs, according to Claim 2,
**characterized in**
**that** the information sent by the LED module (11) contains a piece of information about the status of the sensor or a signal sensed by the sensor (S).

4. A device for operating LEDs, according to any one of the preceding claims,
**characterized in**
**that** a piece of address information is transmitted via the data channel.

5. A device for operating LEDs, according to any one of the preceding claims,
**characterized in**
**that** the driver module (10) also supplies a voltage to the data channel, if the LED module (11) is not supplied with a current by the driver module (10) via the first connection.

6. A device for operating LEDs, according to any one of the preceding claims,
**characterized in**
**that** the LED module (11) also sends information, if the LED module (11) is not supplied with a current by the driver module (10) via the first connection (1).

7. A device for operating LEDs, according to any one of the preceding claims,
**characterized in**
**that** the LED module (11) has a memory, which can be read by the driver module (10) via the data channel.

8. A device for operating LEDs, according to any one of the preceding claims,
**characterized in**
**that** the driver module (10) is designed to monitor the voltage at its output (3) for the data channel and to evaluate a change in the voltage at said output (3) as transmission of information.

9. A device for operating LEDs, according to any one of the preceding claims,
**characterized in**
**that** the driver module (10) can lower the voltage at its output (3) for the data channel for a short time, preferably in the form of a pulse-modulated signal, in order to send a piece of information to the LED module (11).

10. A device for operating LEDs, according to Claim 7,
**characterized in**
**that** the driver module (10) can regularly read the memory of the LED module (11) and after the replacement of the LED module the memory-information read is stored in the memory of the new LED module.

11. A device for operating LEDs, according to any one of the preceding claims,
**characterized in**
**that** the driver module (10) can supply several LED modules via the same connection (1) for supplying current and can exchange information with several LED modules via the same connection (3) for the data channel.

12. A device for operating LEDs, according to any one of the preceding claims,
**characterized in**
**that** one or several LED modules can be switched off, by transmitting a corresponding piece of switch-off information via the data channel to said LED modules and these thereupon interrupt the current through the LED (5).

13. A device for operating LEDs, according to Claim 2,
**characterized in**
**that** the sensor (S) is a color sensor, for example, a CCD sensor.

14. A device for operating LEDs, according to Claim 13,
**characterized in**
**that** the color sensor is placed so that it can receive a portion of the light emitted by the LED modules.

15. A device for operating LEDs, according to any one of the preceding claims,
**characterized in**
**that** a dummy load is arranged on the LED module (11), which is connected with the connection (3) for the data channel, wherein said dummy load loads the data channel and this load can be evaluated by the driver module (10) as a piece of information from the LED module (11).

16. A method for operating LEDs, having the following steps:
Control of an LED module (11) with at least one LED (5) by a driver module (10), which has a switching regulator, a power factor correction circuit, a potential separation and/or an interface for user control, wherein a data channel is present for transmission of information about the LED module (11);
supply of the LED module (11) with a current by the driver module (10) via a first connection (1), wherein the LED module has a second connection (2), preferably as a ground connection (GND), and is connected with the driver module (10) via a third connection (3), which is designed as the data channel;
supply of the data channel with a voltage by the driver module (10),
use of the voltage to the data channel for supplying a logic circuit on the LED module (11), and short-circuiting of the voltage to the data channel for sending information by the LED module (11);
wherein the information sent by the LED module (11) contains a piece of information about a parameter of the LED module (11) or the status of the LED module (11),
**characterized by**
switching off the voltage supplied by the driver module (10) to the data channel at the end of a start-up phase of the driver module (10).

## Revendications

1. Dispositif de commande de LED, comprenant :
un module pilote (10), le module pilote comprenant un régulateur de commutation, un circuit de correction de facteur de puissance, une séparation de potentiel et/ou une interface de commande par l'utilisateur ; et
un module LED (11), avec au moins une LED (5), commandé par le module pilote (10) ;
le module LED (11) étant alimenté en courant par l'intermédiaire d'un branchement (1) par le module pilote (10) et un deuxième branchement (2) étant prévu, de préférence en tant que liaison avec la masse (GND) ;
le module LED (11) étant relié au module pilote (10) par l'intermédiaire d'un troisième branchement (3), qui est conçu comme un canal de données, une tension étant appliquée au canal de données, qui est alimentée par le module pilote (10) ;
le module LED (11) étant conçu pour envoyer des informations, les informations envoyées par le module LED (11) contenant un renseignement concernant un paramètre du module LED (11) ou le statut du module LED (11), le module LED (11) étant conçu, pour l'envoi des informations, pour court-circuiter la tension au niveau du canal de données ; et
la tension au niveau du canal de données étant utilisée pour alimenter un circuit logique sur le module LED (11) ;
**caractérisé en ce que**
le dispositif est conçu pour couper la tension traversant le module pilote (10) au niveau du canal de données après une phase de démarrage du module pilote (10).

2. Dispositif de commande de LED selon la revendication 1,
**caractérisé en ce que**
la tension au niveau du canal de connées est utilisé en outre pour alimenter un capteur, qui est disposé sur le module LED (11) et qui est relié avec le module LED (11).

3. Dispositif de commande de LED selon la revendication 2,
**caractérisé en ce que**
les informations envoyées par le module LED (11) contiennent un renseignement concernant le statut du capteur ou un signal détecté par le capteur (S).

4. Dispositif de commande de LED selon l'une des revendications précédentes,
**caractérisé en ce que**
une information d'adresse est transmise par l'intermédiaire du canal de données.

5. Dispositif de commande de LED selon l'une des revendications précédentes,
**caractérisé en ce que**
le module pilote (10) applique également une tension au canal de données, lorsque le module LED (11) n'est pas alimenté en courant par l'intermédiaire du premier branchement par le module pilote (10).

6. Dispositif de commande de LED selon l'une des revendications précédentes,
**caractérisé en ce que**
le module LED (11) envoie également des informations lorsque le module LED (11) n'est pas alimenté en courant par l'intermédiaire du premier branchement (1) par le module pilote (10).

7. Dispositif de commande de LED selon l'une des revendications précédentes,
**caractérisé en ce que**
le module LED (11) dispose d'une mémoire, qui peut être lue par le module pilote (10) par l'intermédiaire du canal de données.

8. Dispositif de commande de LED selon l'une des revendications précédentes,
**caractérisé en ce que**
le module pilote (10) est conçu pour surveiller la tension à sa sortie (3) pour le canal de données et analyser une modification de la tension à cette sortie (3) en tant que transmission d'informations.

9. Dispositif de commande de LED selon l'une des revendications précédentes,
**caractérisé en ce que**
le module pilote (10) peut abaisser brièvement la tension à sa sortie (3) pour le canal de données,
de préférence sous la forme d'un signal modulé par impulsions, afin d'envoyer une information au module LED (11).

10. Dispositif de commande de LED selon la revendication 7,
**caractérisé en ce que**
le module pilote (10) peut lire régulièrement la mémoire du module LED (11) et, après le remplacement du module LED, les infirmations lues dans la mémoire peuvent être enregistrées dans la mémoire du nouveau module LED.

11. Dispositif de commande de LED selon l'une des revendications précédentes,
**caractérisé en ce que**
le module pilote (10) peut alimenter en courant plusieurs modules LED par l'intermédiaire du même branchement (1) pour l'alimentation en courant et peut échanger des infirmations avec plusieurs modules LED par l'intermédiaire du même branchement (3) pour le canal de données.

12. Dispositif de commande de LED selon l'une des revendications précédentes,
**caractérisé en ce que**
un ou plusieurs modules LED peuvent être arrêtés en transmettant par l'intermédiaire du canal de données une information d'arrêt correspondante à ces modules LED et ceux-ci interrompent alors le courant à travers les LED (5).

13. Dispositif de commande de LED selon la revendication 2,
**caractérisé en ce que**
le capteur (S) est un capteur de couleur, par exemple un capteur CCD.

14. Dispositif de commande de LED selon la revendication 13,
**caractérisé en ce que**
le capteur de couleur est positionné de façon à ce qu'il puisse recevoir une partie de la lumière émise par les modules LED.

15. Dispositif de commande de LED selon l'une des revendications précédentes,
**caractérisé en ce que**
sur le module LED (11) est disposée une charge factice qui est reliée avec le branchement (3) pour le canal de données, cette charge factice sollicitant le canal de données et cette charge étant analysée par le module pilote (10) comme une information provenant du module LED (11).

16. Procédé de commande de LED comprenant les étapes suivantes :
commande d'un module LED (11) avec au moins une LED (5) par un module pilote (10), qui comprend un régulateur de commutation, un circuit de correction de facteur de puissance, une séparation de potentiel et/ou une interface de commande par l'utilisateur, un canal de données étant prévu pour la transmission d'informations par l'intermédiaire du module LED (11) ;
alimentation du module LED (11) en courant par le module pilote (10) par l'intermédiaire d'un premier branchement (1), le module LED comprenant un deuxième branchement (2), de préférence sous la forme d'une liaison à la masse (GND) et étant relié avec le module pilote (10) par l'intermédiaire d'un troisième branchement (3) qui est conçu comme le canal de données ;
alimentation du canal de données par le module pilote (10) avec une tension ;
utilisation de la tension appliquée au canal de données pour alimenter un circuit logique sur le module LED (11) et court-circuitage de la tension appliquée au canal de données pour l'envoi d'informations à l'aide du module LED (11) ;
les informations envoyées par le module LED (11) contenant un renseignement concernant un paramètre du module LED (11) ou le statut du module LED (11),
**caractérisé par**
l'arrêt de la tension appliquée par le module pilote (10) au canal de données après une phase de démarrage du module pilote (10).
